# EUROPÄISCHE PATENTSCHRIFT

(11) **EP 0 356 921 B1**
(45) Veröffentlichungstag und Bekanntmachung des Hinweises auf die Patenterteilung: **13.01.1993**
(21) Anmeldenummer: 89115667.1
(22) Anmeldetag: 25.08.1989
(51) Int. Cl.: B23H 7/26, B23H 1/00

(54) **Verfahren und Vorrichtung zur elektroerosiven Bearbeitung von metallischen Werkstücken**
Method and device for the electroerosive machining of metal work pieces
Procédé et dispositif d'usinage par électroérosion de pièces métalliques

(30) Priorität: 30.08.1988 DE 3829363
(43) Veröffentlichungstag der Anmeldung: 07.03.1990
(73) Patentinhaber: HERBERT WALTER WERKZEUG- UND MASCHINENBAU GMBH, D-78737 Fluorn-Winzeln (DE)
(72) Erfinder: Walter, Herbert, D-7239 Fluron-Winzeln (DE)
(74) Vertreter: Patentanwälte Westphal, Buchner, Mussgnug Neunert, Göhring

(56) Entgegenhaltungen:
- GB-A- 2 138 596

## Beschreibung

Die Erfindung betrifft ein Verfahren zur elektroerosiven Bearbeitung eines metallischen Werkstückes gemäß dem Oberbegriff des Anspruchs 1 sowie eine Vorrichtung zur Ausführung dieses Verfahrens.

In einer integrierten, automatischen Fertigung (CIM) müssen einer Funkenerodiermaschine ständig neue Elektroden automatisch aus einem Magazin zugeführt werden. In herkömmlicher Weise werden die Elektroden in der Regel auf einer separaten Fräsmaschine gefertigt und von dort einem Vorratsmagazin der Erodiermaschine zugeführt. Von der Erodiermaschine werden je nach Bedarf neue Elektroden aus dem Magazin entnommen und zur elektroerosiven Bearbeitung metallischer Werkstücke verwendet.

So ist aus der GB 2 138 596 A eine Vorrichtung zur elektrosiven Bearbeitung von Werkstücken bekannt, die eine Nachbearbeitungsvorrichtung umfaßt, mittels welcher die Elektrodenköpfe mittels spanabhebender und elektroerosiver Verfahren neu formierbar sind. Mittels einer frei schwenkbaren Transportvorrichtung, einem Manipulator, werden die Bearbeitungselektroden zwischen der Nachbearbeitungsvorrichtung, einem Werkzeugmagazin und der Elektroerodierbearbeitungseinheit überführt. Ein derartiger Manipulator ist nachteilig kostenintensiv.

Weitere Kosten ergeben sich durch die Fräsmaschine- bzw. Elektrodiervorrichtung, die zur Herstellung der Elektroden benutzt wird.

Aus der deutschen Patentschrift 28 37 719 C2 ist eine Erodiermaschine mit einer Einrichtung zum selbsttätigen Wechsel ihrer Bearbeitungselektrode bekannt. Bei dieser Vorrichtung werden die Bearbeitungselektroden aus einem Magazin entnommen bzw. nach der Bearbeitung im Magazin abgelegt. Hierzu ist das Magazin verstellbar gelagert, so daß es mit seinen Lagerplätzen eine Wechselposition neben der Elektrodenaufnahme zur Entnahme neuer bzw. zur Aufnahme gebrauchter Elektroden durchlaufen kann. Jedoch weist auch diese Vorrichtung die gleichen oben beschriebenen Nachteile auf, da dem Magazin immer neue Elektroden von Hand oder mit einem Manipulator zugeführt werden müssen. Eine automatische Herstellung der benötigten Elektroden ist bei dieser Vorrichtung nicht möglich.

Der Erfindung liegt die Aufgabe zugrunde, ein gattungsgemäßes Verfahren zur funkenerosiven Bearbeitung so zu verbessern, daß der Fertigungsablauf vereinfacht und kostengünstiger gestaltet wird. Eine weitere Aufgabe der Erfindung besteht in der Schaffung einer Vorrichtung zur Durchführung dieses Verfahrens.

Diese Aufgaben werden durch die kennzeichnenden Merkmale der Ansprüche 1 und 4 gelöst. Vorteilhafte Weiterbildungen des Verfahrens und der Vorrichtung zur Durchführung dieses Verfahrens sind in den Unteransprüchen gekennzeichnet.

Der Kerngedanke der Erfindung besteht darin, die Erodiermaschine selbst zur Herstellung der Elektroden zu verwenden. Dazu wird der Erodierkopf aus der Erodierposition heraus in eine Bearbeitungsposition verfahren und der Rohling für die Elektrode oder auch die nachzuarbeitende Elektrode mittels der ohnehin vorhandenen Steuerung des Erodierkopfes relativ zu einem vorzugsweise stationären rotierenden Werkzeug zur spanabhebenden Bearbeitung, vorzugsweise einem Fräs- oder Schleifwerkzeug, bewegt.

Dadurch werden ein zusätzlicher Manipulator und auch eine selbständige Maschine zur spanabhebenden Bearbeitung überflüssig, wodurch sich eine erhebliche Kosteneinsparung ergibt. Da die Elektrode nach der Herstellung aus dem Rohling im Erodierkopf unverändert eingespannt bleibt, werden Ungenauigkeiten durch einen zusätzlichen Umspannvorgang vermieden.

Auch können die Bearbeitungswerkzeuge selbst, also vorzugsweise Fräswerkzeug oder Schleifwerkzeug, automatisch gewechselt werden, wozu auch der Erodierkopf eingesetzt werden kann.

Bei den heutzutage meist verwendeten Graphit-Elektroden erfordert die Herstellung einer Elektrode aus einem Rohling nur sehr kurze Zeiten, so daß die Stillstandszeit der Erodiermaschine während der Elektrodenherstellung kaum ins Gewicht fällt.

Falls dennoch eine Vermeidung der Stillstandszeit erforderlich ist, wird das Verfahren erfindungsgemäß so ausgestaltet, daß, während eine Erodierkopf in an sich bekannter Weise eine Elektrode aus einem Magazin entnimmt und in eine Erodierposition zur Bearbeitung des Werkstückes verfährt, gleichzeitig mit einer Einspannvorrichtung in der Art eines Erodierkopfes, die mit einer vorzugsweise stationären Einrichtung zur spanabhebenden Bearbeitung zusammenwirkt, neue Elektroden hergestellt und an das Magazin übergeben werden. Erfindungsgemäß wird dabei ein Rohling oder eine nachzuarbeitende Elektrode mittels der Einspannvorrichtung von oben entlang eines Werkzeuges, vorzugsweise eines rotierenden Fräswerkzeuges oder Schleifwerkzeuges, bewegt.

In vorteilhafter Weiterbildung des Verfahrens erfolgt die Bearbeitung der Elektrode auf Endmaß in zwei Arbeitsgängen. Zunächst wird eine einfache Form mit leichtem Übermaß vorgearbeitet, sodann verfährt der Erodierkopf bzw. die Einspannvorrichtung mit der vorgearbeiteten Elektrode an einen Meßfühler zur Ausmessung des Ist-Maßes. Die Abweichung des Ist-Maßes vom Soll-Maß wird bei einem zweiten Bearbeitungsgang auf Endmaß bei der Steuerung des Erodierkopfes bzw. der Einspannvorrichtung berücksichtigt, wodurch die Elektrode mit besonders hoher Präzision gefertigt wird. In vorbestimmten Zeitabständen bzw. nach Erreichen einer bestimmten Erodiertiefe oder nach einer bestimmten Anzahl von Erodiervorgängen kann der Erodierkopf wieder in eine Meßposition verfahren werden, um die Maßhaltigkeit der Elektrode zu überprüfen. Je nach Abweichungen der Ist-Maße von den Soll-Maßen wird entweder die elektroerosive Bearbeitung fortgesetzt, die Elektrode nachgearbeitet oder eine neue Elektrode hergestellt. Die gemessenen Soll-Ist-Abweichungen werden bei der anschließenden elektroerosiven Bearbeitung als Korrektur berücksichtigt. Auch diese Verfahrensweise führt zu einer höheren Genauigkeit bei der elektroerosiven Bearbeitung, insbesondere bei einer automatischen Fertigung.

Eine Vorrichtung zur Durchführung des Verfahrens besteht aus einem Erodierkopf, der mindestens in Vorschubrichtung zum Werkstück hin und senkrecht dazu verfahrbar ist, sowie aus einer Einrichtung zur spanabhebenden Bearbeitung, vorzugsweise einer Fräs- oder Schleifeinrichtung, deren Werkzeug mit der Bearbeitungsseite nach oben weist oder waagrecht angeordnet ist. Im einfachsten Fall ist als Werkzeug ein Stirn- oder Walzenfräser vorgesehen.

Die Bewegungen des Erodierkopfes in den verschiedenen Richtungen sind über eine vorzugsweise programmgesteuerte elektronische Steuereinrichtung steuerbar. Die Führung des Erodierkopfes in X-Richtung ist so weit verlängert, daß der Erodierkopf von der Erodierposition bis zu der Bearbeitungsposition verfahrbar ist, in der die Bearbeitungseinrichtung angeordnet ist.

Bei herkömmlichen Fräs- oder Schleifmaschinen wird normalerweise das Werkstück mit dem Werkzeug von oben oder seitlich bearbeitet. Die Verlegung des Werkzeuges nach unten führt dazu, daß die Elektrode nach der Herstellung oder auch Nachbearbeitung zur elektroerosiven Bearbeitung des Werkstückes nicht umgespannt werden muß.

In vorteilhafter Weiterbildung ist die Bearbeitungseinrichtung zwischen einer vertikalen und einer horizontalen Position kontinuierlich verschwenkbar ausgebildet. Wird zusätzlich eine Werkzeugwechseleinrichtung vorgesehen, so kann auch ein gegebenenfalls erforderlicher Werkzeugwechsel automatisch durchgeführt werden.

In alternativer Ausbildung kann zusätzlich zu dem Erodierkopf eine Einspannvorrichtung, die wie der Erodierkopf aufgebaut und gesteuert verfahrbar ist, vorgesehen sein. Diese Einspannvorrichtung wirkt in der beschriebenen Weise mit der Bearbeitungseinrichtung zusammen. Für den Erodierkopf bzw. die Einspannvorrichtung ist dabei eine gemeinsame Führung in X-Richtung vorgesehen. Zur Aufnahme und Entnahme von Rohlingen und von Elektroden ist ein Magazin zwischen der Bearbeitungseinrichtung und der Erodierposition angeordnet. Bei dieser Vorrichtung entfallen die Stillstandszeiten der Erodiermaschine während der Herstellung bzw. Nacharbeitung von Elektroden. Dennoch ist kein Manipulator erforderlich, da die Elektrode nicht nach der Bearbeitung um 180° gedreht werden muß.

Die Erfindung ist anhand von Ausführungsbeispielen, die in den Zeichnungen dargestellt sind, nachstehend ausführlich erläutert. Es zeigen:
Figur 1 eine schematische Vorderansicht eine erfindungsgemäßen Bearbeitungszentrums zur elektroerosiven Bearbeitung in einer ersten Ausführung mit einem Erodierkopf, einer Einspannvorrichtung und einer Fräs- bzw. Schleifeinrichtung,
Figur 2 eine schematische Aufsicht des Bearbeitungszentrums gemäß Figur 1,
Figur 2a eine schematische Aufsicht eines Bearbeitungszentrums in einer zweiten Ausführungs mit einem Erodierkopf und einer Fräs- bzw. Schleifeinrichtung,
Figur 2b eine schematische Aufsicht eines Bearbeitungszentrums in einer dritten Ausführung mit einem Erodierkopf, einer Einspannvorrichtung und einer Dreheinrichtung,
Figur 3 eine vereinfachte, teilweise geschnittene Seitenansicht eines Erodierkopfes gemäß Figur 1, 2, 2a bzw. 2b von rechts,
Figur 4 eine vergrößerte Seitenansicht der C-Achse des Erodierkopfes gemäß Figur 3,
Figur 5 eine vergrößerte Vorderansicht der C-Achse des Erodierkopfes gemäß Figur 3 nach Abnahme der Blechverkleidung,
Figur 6 eine vereinfachte, teilweise geschnittene Ansicht der Z-Achse des Erodierkopfes gemäß Figur 3 vor Anbau der C-Achse,
Figur 7 eine vereinfachte Aufsicht der X-Achse und der Y-Achse eines Erodierkopfes gemäß Figur 3 vor Aufbau der Z-Achse und der C-Achse,
Figur 8 eine vergrößerte Vorderansicht der Bearbeitungseinrichtung gemäß Figur 1 bzw. 2a mit eingesetztem Fräswerkzeug,
Figur 8a eine vergrößerte Vorderansicht der Bearbeitungseinrichtung gemäß Figur 8 mit eingesetztem Schleifwerkzeug,
Figur 9 einen Längsschnitt der Bearbeitungseinrichtung gemäß Figur 8,
Figur 9a einen Längsschnitt der Bearbeitungseinrichtung gemäß Figur 8a,
Figur 10 eine teilweise perspektivische Vorderansicht der Werkzeugwechseleinrichtung gemäß Figur 1, 2 bzw. 2a in vegrößerter Darstellung,
Figur 11 eine teilweise geschnittene Ansicht der Werkzeugwechseleinrichtung gemäß Figur 10 von rechts und

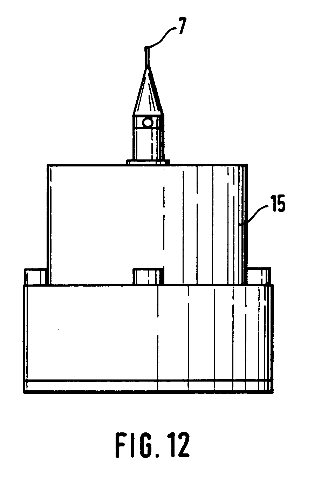

Figur 12 eine vergrößerte Vorderansicht der Meßeinrichtung gemäß Figur 1, 2, 2a bzw. 2b.

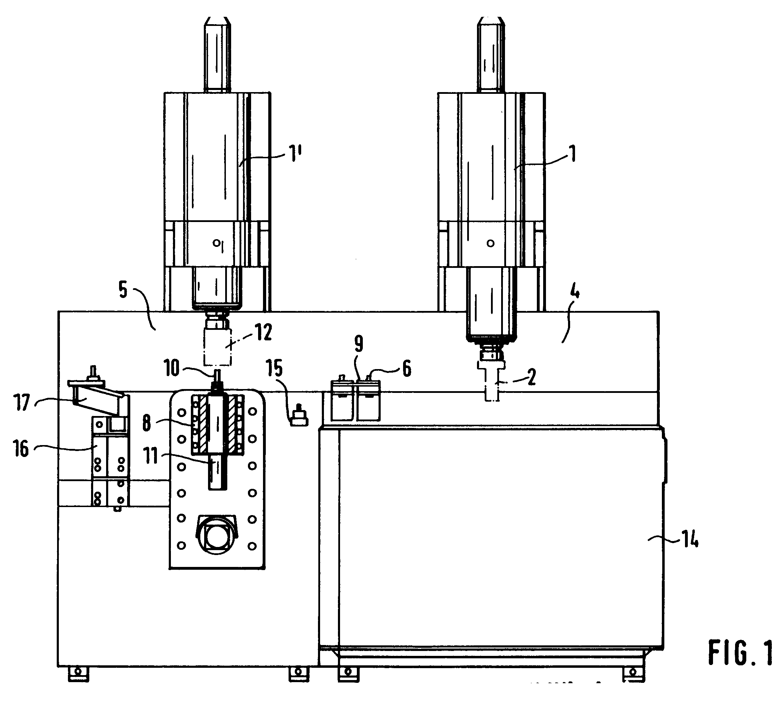

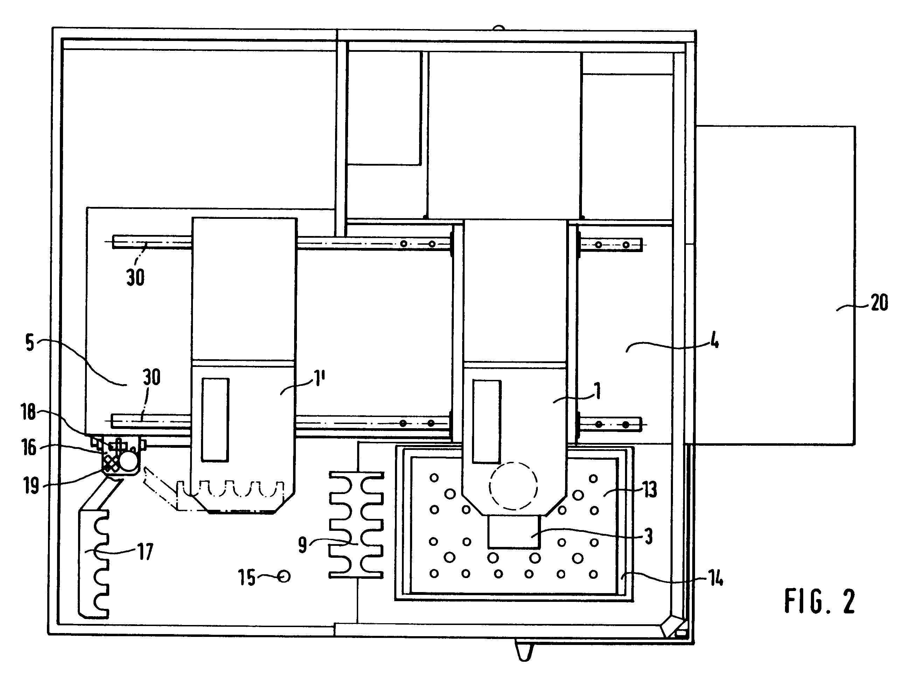

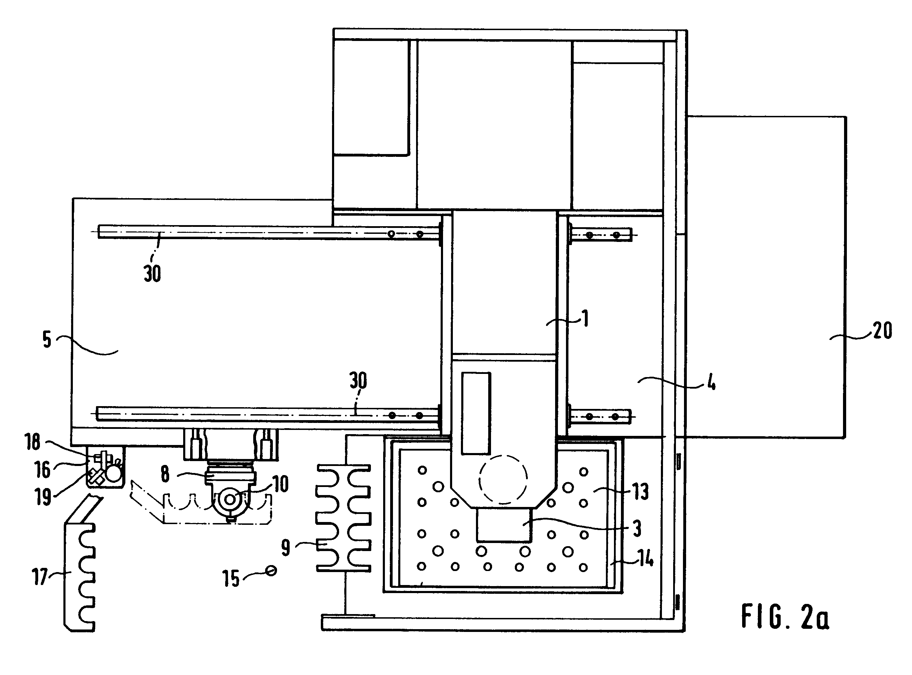

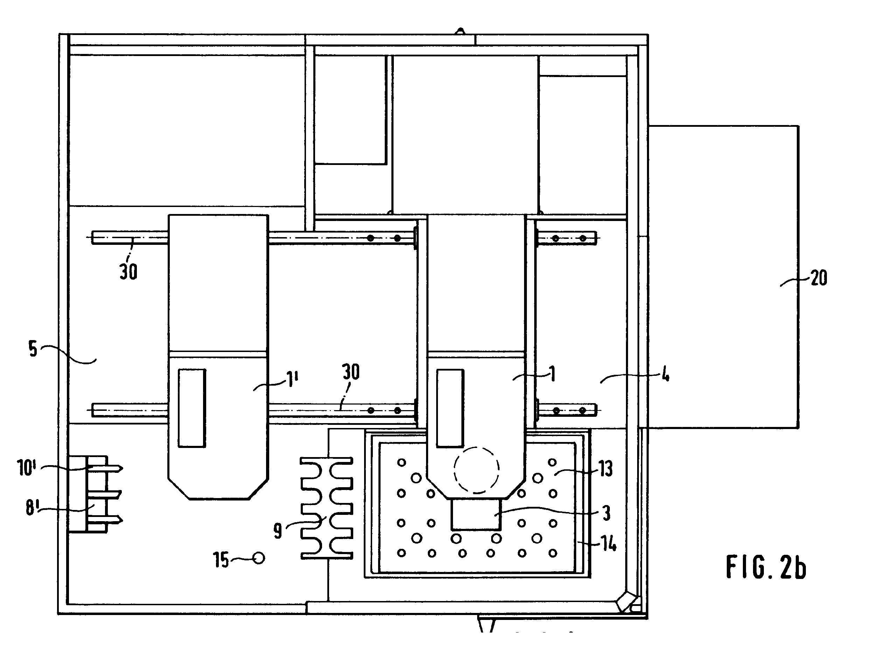

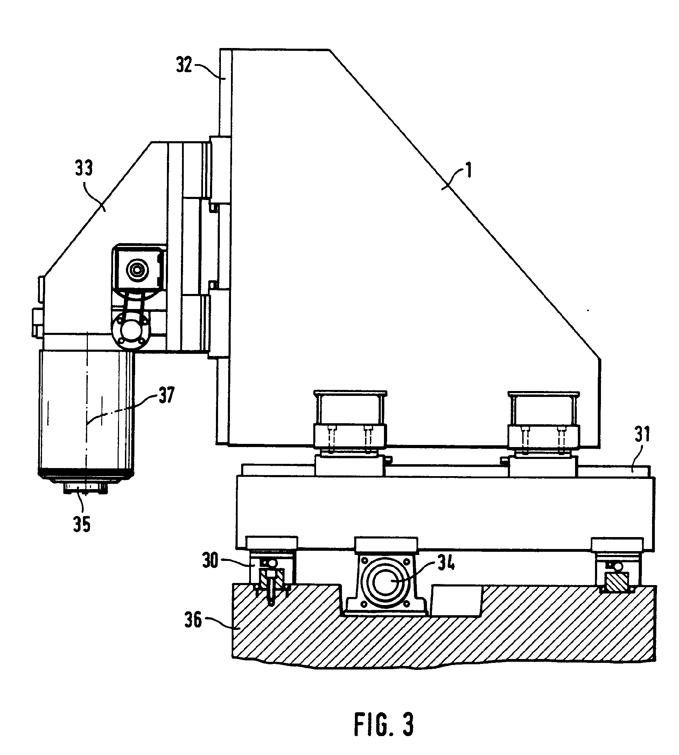

Gemäß den Figuren 1 und 2 ist ein Bearbeitungszentrum zur elektroerosiven Bearbeitung mit einem Erodierkopf 1 und einer Einspannvorrichtung 1′ in der Art eines Erodierkopfes ausgestattet, die auf einer gemeinsamen Führung, der X-Achse 30, verfahrbar sind. Im folgenden wird unter dem Begriff "X-Achse" eine in X-Richtung verfahrbare Baugruppe mit Führung und Antriebseinheit verstanden. In entsprechender Weise sind die Begriffe "Y-Achse" und "Z-Achse" zu verstehen. Unter "C-Achse" wird eine Baugruppe verstanden, die eine vertikale Drehachse und eine integrierte Antriebseinheit zum Antrieb der Drehachse aufweist. Wie aus der Figur 3 näher ersichtlich, sind der Erodierkopf 1 und die Einspannvorrichtung 1′ zusätzlich in zwei zur X-Achse 30 senkrechte Achsen, nämlich jeweils in der Y-Achse 31 und der Z-Achse 32 verfahrbar. Zusätzlich sind der Erodierkopf 1 und die Einspanneinrichtung 1′ jeweils um ihre eigene Achse drehbar ausgebildet (C-Achse 33 mit Drehachse 37 in Figur 3).

Der Erodierkopf 1, in den eine Elektrode 2 eingespannt ist, ist in einer Erodierposition 4 über einem Erodierbad 14 dargestellt. Am anderen Ende der X-Achse 30 ist in einer Bearbeitungsposition 5 die Einspannvorrichtung 1′ gezeigt, die zusammen mit einer Bearbeitungseinrichtung 8 zur Herstellung von Elektroden 2 verwendbar ist.

Unterhalb des Erodierkopfes 1 ist ein Erodierbad 14 mit einer Aufspannplatte 13, auf der ein zu bearbeitendes Werkstück 3 aufgespannt ist, angeordnet. Neben dem Erodierbad 14 ist seitlich zur X-Achse 30 ein Magazin 9 zur Aufnahme von Elektrodenrohlingen 12 und von Elektroden 2 vorgesehen. Die Elektrodenrohlinge 12 bzw. Elektroden 2 sind über eine koaxiale Kupplung 6 an ihrem oberen Ende an den Erodierkopf 1 bzw. die Einspannvorrichtung 1′ ankuppelbar. Neben dem Magazin 9 ist weiterhin eine automatische Meßeinrichtung 15 mit einem Meßfühler angeordnet, dessen Ausgangssignale einer elektronischen Steureinrichtung 20 zur Verarbeitung zugeführt sind.

Zur Bearbeitung des Werkstückes 3 verfährt der Erodierkopf 1 zunächst zu dem Magazin 9, kuppelt dort über die Kupplung 6 eine vorgefertigte Elektrode 2 an und verfährt dann auf der X-Achse 30 wieder seitlich in die Erodierposition 4, in der das Werkstück 3 nach Abtauchen der Elektrode 2 in das Erodierbad 14 bearbeitet werden kann.

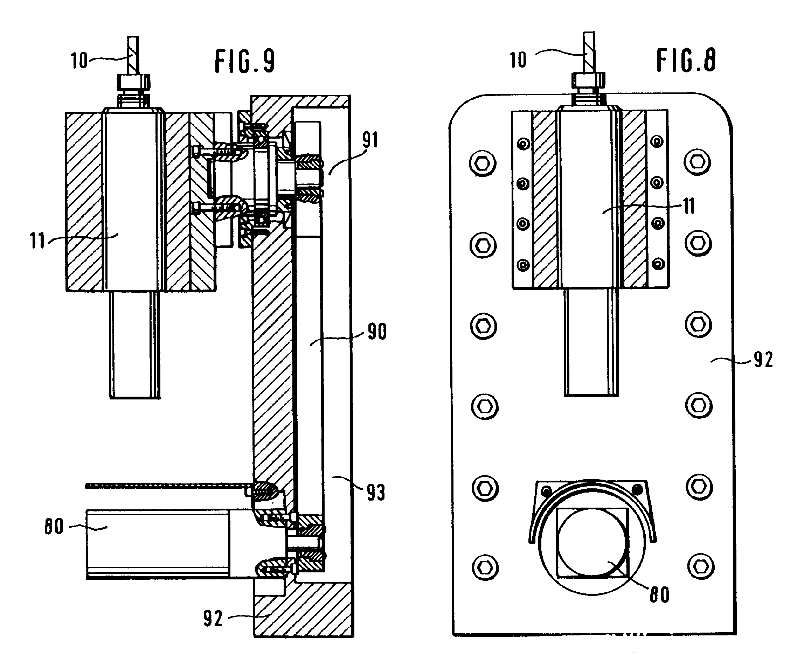

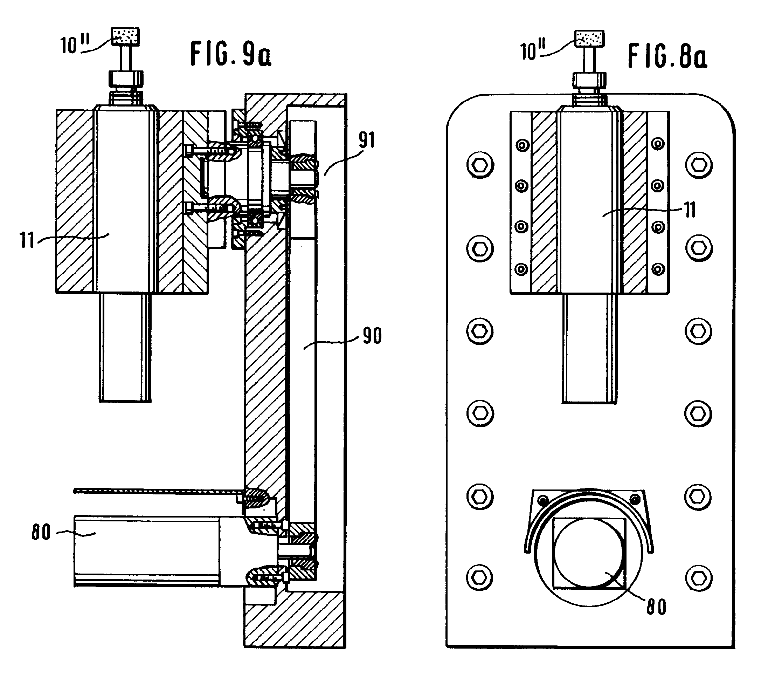

Unterhalb der Einspanneinrichtung 1′ ist eine Bearbeitungseinrichtung 8 angeordnet, die der Übersichtlichkeit halber in Figur 2 nicht dargestellt ist. An der Bearbeitungseinrichtung 8, die im einzelnen in den Figuren 8, 8a bzw. 9, 9a dargestellt ist, ist ein Werkzeugpindeltrieb 11 zum Antrieb eines Bearbeitungswerkzeuges 10 vorgesehen, das als Fräswerkzeug oder Schleifwerkzeug ausgebildet sein kann und mit seiner Bearbeitungsseite nach oben weist.

Die Bearbeitungseinrichtung 8 ist zwischen der gezeigten vertikalen Position und einer horizontalen Position in beiden Richtungen verschwenkbar ausgebildet, also insgesamt um 180° verschwenkbar. Alternativ hierzu kann auch eine zweite Bearbeitungseinrichtung mit horizontaler Drehachse vorgesehen sein.

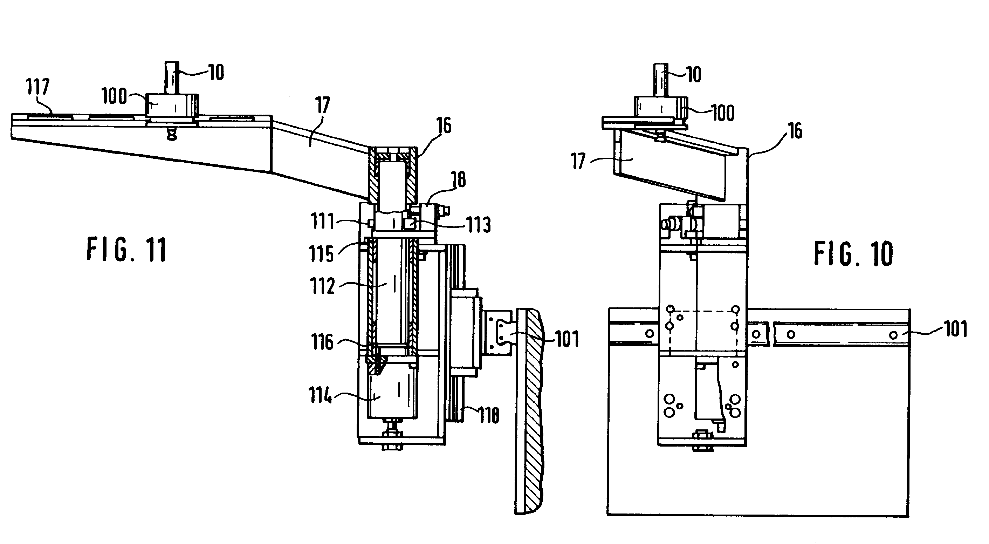

Um einen automatischen Wechsel des Bearbeitungswerkzeuges 10 zu ermöglichen, ist zusätzlich eine Werkzeugwechseleinrichtung 16 zur Aufnahme von Bearbeitungswerkzeugen 10 neben der Einspannvorrichtung 1′ angeordnet. An der Werkzeugwechseleinrichtung 16 ist ein Schwenkarm 17 mit vier Werkzeugablagepositionen vorgesehen, der zum Werkzeugwechsel zwischen der ausgezogenen Stellung und der gestrichelten Stellung gemäß Figur 2 verschwenkbar ist. Aufbau und Funktion der Werkzeugwechseleinrichtung 16 sind anhand der Figuren 10 und 11 näher erläutert.

Zur Herstellung einer Elektrode 2 verfährt die Einspanneinrichtung 1′ zu dem Magazin 9 und entnimmt daraus einen Rohling 12, der mit der Kupplung 6 angekuppelt wird. Die Einspanneinrichtung 1′ verfährt nun in die Bearbeitungsposition 5 zu der Bearbeitungseinrichtung 8. Nach einem von der elektronischen Steuereinrichtung 20 vorgegebenen Programm fährt nun die Einspannvorrichtung 1′ mit dem Rohling 12 an dem rotierenden Bearbeitungswerkzeug 10 entlang, um zunächst eine einfache Elektrodenform mit leichtem Übermaß zu fräsen. Danach kann die Einspanneinrichtung 1′ in X-, Y- und Z-Richtung verfahren und gegebenenfalls um ihre Längsachse gedreht werden. Falls erforderlich, kann die Bearbeitungseinrichtung 8 dabei zusätzlich um beliebige Winkel verschwenkt werden. Nach der Vorfräsung verfährt die Einspannvorrichtung 1′ zu der Meßeinrichtung 15, mittels derer die Ist-Maße des vorgefrästen Rohlings ausgemessen werden. Die Abweichungen der Ist-Maße von den im Programm der elektronischen Steuereinrichtung 20 vorgegebenen Soll-Maßen werden gespeichert und bei einem zweiten Fräsvorgang, in dem die Elektrode auf Endmaß gefräst wird, als Korrektur berücksichtigt. Dadurch ergibt sich eine besonders hohe Präzision bei der Elektrodenherstellung. Die Ausmessung der vorgefrästen Elektrode ist wegen der einfachen Form in einfacher Weise durchführbar; eine Messung komplizierter Formen nach Fertigstellung der Elektrode ist nicht erforderlich. Die fertigen Elektroden werden in dem Magazin 9 abgelegt, aus dem der Erodierkopf 1 Elektroden zur elektroerosiven Bearbeitung von Werkstücken entnimmt.

Obwohl es zum Erreichen eines möglichst hohen Durchsatzes zweckmäßig ist, die Bearbeitungseinrichtung gemäß Figur 1 als Fräs- bzw. Schleifeinrichtung auszubilden, kann die Bearbeitungseinrichtung 8′ gemäß Figur 2b auch als einfache Halterung zur Aufnahme von Drehwerkzeugen 10′ ausgebildet sein. In diesem Fall wird der Rohling über die C-Achse der Einspanneinrichtung 1′ in Rotation versetzt. Gegebenenfalls kann zur besseren Handhabung die Bearbeitungseinrichtung 8′ auch linear verfahrbar oder verschwenkbar ausgebildet sein.

In manchen Fällen kann auch ohne die zusätzliche Einspanneinrichtung 1′ nur mit dem Erodierkopf 1 gemäß Figur 2a ein ausreichend hoher Durchsatz des Bearbeitungszentrums erzielt werden. In diesem Fall wird der Erodierkopf 1 sowohl zum Erodieren als auch zur Herstellung oder Nacharbeitung von Elektroden in Verbindung mit der Bearbeitungseinrichtung genutzt. Bei dieser besonders kostengünstigen Ausführung ist als Bearbeitungseinrichtung 8 vorzugsweise gemäß Figur 2a eine Schleif- bzw. Fräseinrichtung vorgesehen, um die Stillstandszeiten während der Herstellung bzw. Nacharbeitung einer Elektrode zu verkürzen. Nach der Herstellung einer Elektrode kann diese sogleich ohne Umspannen zur elektroerosiven Bearbeitung des Werkstückes benutzt werden. Dadurch läßt sich eine besonders hohe Präzision bei der Erodierbearbeitung erzielen.

Falls gewünscht, kann in vorgegebenen Zeitabständen oder nach Erreichen einer vorgegebenen Erodiertiefe oder nach einer vorgegebenen Anzahl von Erodiervorgängen der Erodierkopf 1 von der Erodierposition 4 zur Meßeinrichtung 15 verfahren, um die Ist-Maße der Elektrode auszumessen. Liegen die Abweichungen der Ist-Maße von den Soll-Maßen unterhalb eines vorbestimmten Wertes X1, so wird die Bearbeitung des Werkstückes 3 fortgesetzt. Überschreiten diese Soll-Ist-Abweichungen jedoch den Wert X1, liegen aber noch unterhalb eines vorbestimmten Werts X2, so verfährt der Erodierkopf 1 in die Bearbeitungsposition 5, in der die Elektrode 2 nachgearbeitet wird bzw. übergibt die Elektrode zur Nachbearbeitung an das Magazin 9. Die Soll-Ist-Abweichungen der Elektrodenmaße werden in beiden Fällen als Korrektur bei der elektroerosiven Bearbeitung berücksichtigt. Liegen jedoch die Soll-Ist-Abweichungen der Elektroden auch oberhalb des Wertes X2, so wird eine neue Elektrode hergestellt bzw. eine neue Elektrode aus dem Magazin entnommen, bevor die Bearbeitung des Werkstückes 3 fortgesetzt wird.

Durch diese automatische Nachbearbeitung bzw. Neuherstellung der Elektrode läßt sich bei einer automatischen Fertigung über lange Zeiträume höchstmögliche Präzision erreichen, ohne daß Bedienungspersonal eingreifen muß.

Die Anordnung der Drehachse und der drei Linearachsen des Erodierkopfes 1 ist aus Figur 3 ersichtlich. Alle drei Linearachsen, die X-Achse 30, die Y-Achse 31 und die Z-Achse 32 sind in gleicher Weise aufgebaut und mittels eines Spindeltriebes verfahrbar. Auf dem Maschinengestell 36 ist zunächst die X-Achse 30 angeordnet, die zur Führung zwei parallele Führungsschienen und zum Antrieb einen Spindeltrieb 34 aufweist. Auf der X-Achse 30 ist die Y-Achse 31 um 90° versetzt angeordnet und auf dieser wiederum um 90° versetzt die Z-Achse 32. Dabei weisen die beiden Führungsschienen der Z-Achse zur Vorderseite des Bearbeitungszentrums. Auf der Z-Achse 32 ist die C-Achse 33 angeordnet, in deren Elektrodenaufnahme 35 eine Elektrode bzw. ein Rohling automatisch eingespannt werden kann.

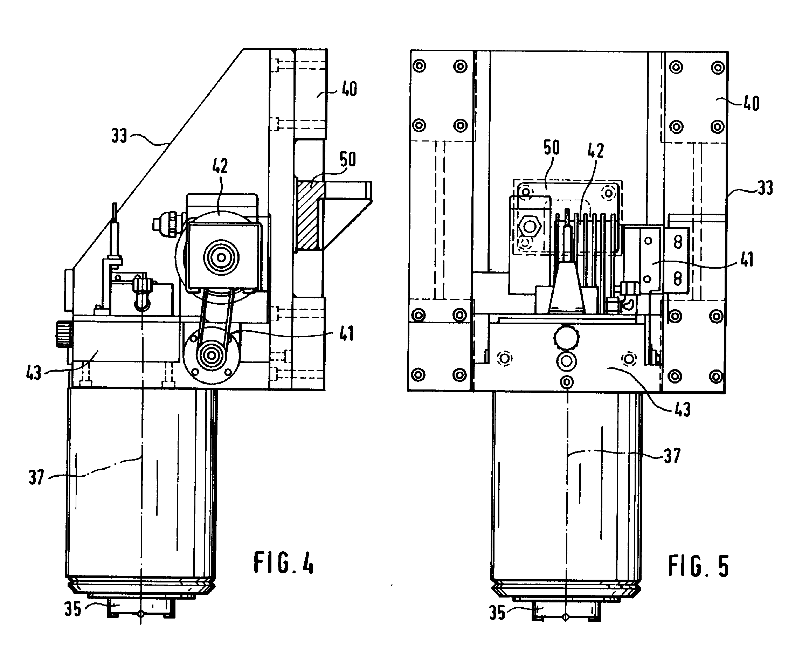

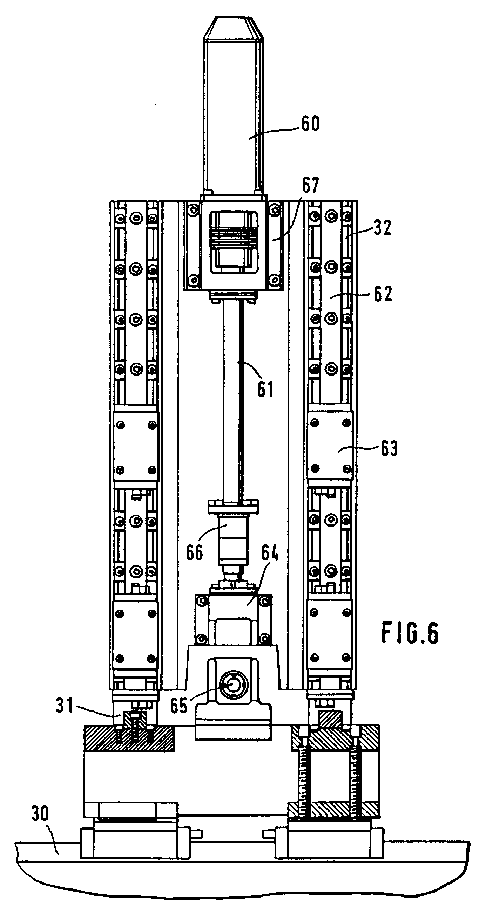

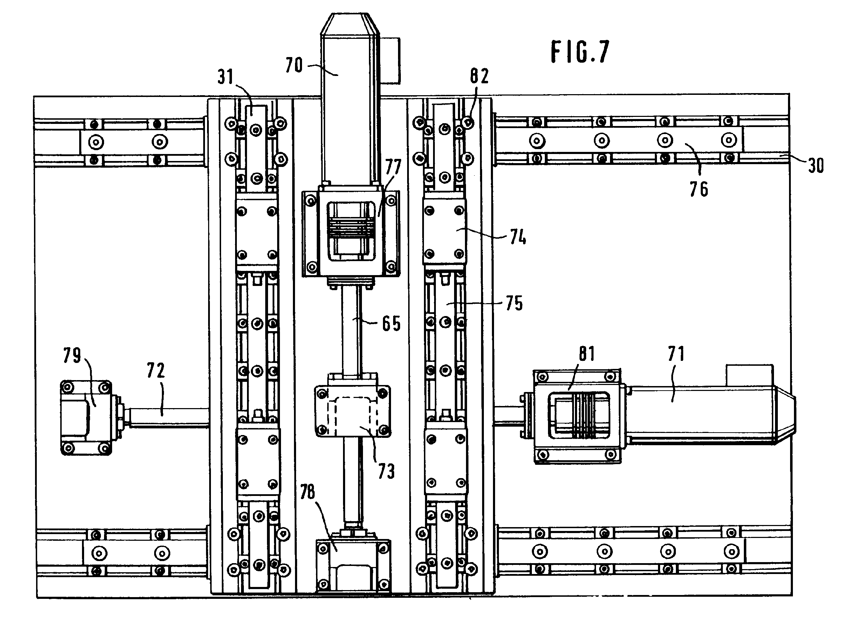

Der Aufbau der C-Achse 33 ist aus den Figuren 4 und 5 ersichtlich, während der Aufbau der Z-Achse in Figur 6 und der Aufbau von X- und Y-Achse in Figur 7 dargestellt ist. Die C-Achse ist mit vier Stützflächen 40 auf den Führungsschuhen 63, die gemäß Figur 6 auf den beiden parallelen Führungsschienen 62 der Z-Achse 32 geführt sind, abgestützt. Zum Verfahren der C-Achse in Z-Richtung dient die Spindelmutter 66 der in Figur 6 gezeigten Spindel 61, die in der Spindelmutteraufnahme 50 an der C -Achse 33 befestigt ist. Zur Erzeugung der Rotationsbewegung um die Drehachse 37 ist gemäß den Figuren 4 und 5 ein Elektromotor 42 vorgesehen, dessen Drehbewegung mittels eines Riementriebes 41 auf einen Schneckentrieb 43 übertragen wird,
der der Übersichtlichkeit halber nur angedeutet ist und dessen Abtriebsrad schließlich die Elektrodenaufnahme 35 antreibt. Wird der Erodierkopf zusammen mit einer als Dreheinrichtung ausgebildeten Bearbeitungseinrichtung 8′ zur Elektrodenherstellung bzw. -nacharbeitung genutzt, so ist eine schnellere Rotation der Elektrodenaufnahme 35 um die Drehachse 37 erwünscht. In diesem Fall kann statt des Antriebs über das Riemengetriebe 41 und den Schneckentrieb 43 ein Elektromotor direkt in der Verlängerung der Drehachse 37 angeordnet werden, der Drehzahlen bis zu etwa 3000 U/min ermöglicht und über die elektronische Steuerung auch die Positionierung der Elektrode bzw. des Rohlings auf beliebige Winkelstellungen ermöglicht.

Die in Figur 6 dargestellt Z-Achse 32 weist zwei parallele Führungsschienen 62 auf, zwischen denen ein Spindeltrieb angeordnet ist. Auf den Führungsschienen 62 sind je zwei Führungsschuhe 63 mittels Wälzlagern längsverschieblich geführt. Die Stützflächen 40 der C-Achse 33 sind mit diesen Führungsschuhen 63 verschraubt. Am oberen Ende der Z-Achse ist ein Elektromotor 60 zum Antrieb der Spindel 61 angeordnet ( der Übersichtlichkeit halber ist dieser Elektromotor 60 in Figur 3 nicht dargestellt). Die beidseitig zwischen den Lagern 64 und 67 spielfrei vorgespannte Spindel 61 treibt die Spindelmutter 66 an, die an der C-Achse 33 in der Spindelmutteraufnahme 50 befestigt ist. Die identisch aufgebaute X-Achse und Y-Achse sowie die Spindel der Y-Achse sind in Figur 6 mit den Ziffern 30, 31 und 65 angedeutet.

Gemäß Figur 7 weist die X-Achse 30 zwei parallele Führungsschienen 76 auf, auf denen je zwei Führungsschuhe mit Wälzlagern längsverschieblich geführt sind. Die Y-Achse 31 ist auf diesen insgesamt vier Führungsschuhen befestigt. In der gezeigten Aufsicht sind die Führungsschuhe natürlich verdeckt; nur die Schraublöcher 82 sind von oben erkennbar. In der vorher beschriebenen Weise ist zum Antrieb der X-Achse ein Elektromotor 71 vorgesehen, der die beidseitig zwischen den Lagern 79 und 81 gelagerte Spindel 72 antreibt. Von der Spindel 72 wird in der vorher beschriebenen Weise eine Spindelmutter an der Unterseite der Y-Achse 31 angetrieben, die in Figur 7 durch die Y-Achse verdeckt ist.

Die identisch aufgebaute Y-Achse 31 weist wiederum zwei parallele Führungsschienen 75 auf, auf denen je zwei Führungsschuhe 74 längs verschieblich geführt sind. In der Mitte zwischen den beiden Führungsschienen 75 ist der Elektromotor 70 zum Antrieb der Spindel 65 vorgesehen, die beidseitig zwischen den beiden Lagern 77 und 78 spielfrei gelagert ist. In der Mitte der Spindel 65 ist mit der Ziffer 73 das Spindelgehäuse angedeutet, in dem die Spindelmutter festgelegt ist und auf dessen rechteckiger Oberseite Schraublöcher zur Verbindung mit der Z-Achse vorgesehen sind.

Auch die Einspannvorrichtung 1′ ist vorzugsweise in der gleichen Art wie der Erodierkopf 1 aufgebaut und gesteuert verfahrbar. Lediglich die nur zum Erodieren erforderlichen Einrichtungen, wie Zuführung der Erodierflüssigkeit, entfallen natürlich.

Eine bevorzugte Ausführung der Bearbeitungseinrichtung 8 ist in den Figuren 8 und 9 dargestellt. Am unteren Ende eines Grundkörpers 92 ist ein Elektromotor 80 mit waagrechter Drehachse stirnseitig angeflanscht, so daß sein Abtriebsritzel in einen Hohlraum 93 auf der Rückseite des Grundkörpers 92 hineinragt und nach außen durch den Grundkörper 92 geschützt ist.

Am oberen Ende des Grundkörpers 92 ist parallel zum Elektromotor 80 eine Schwenkachse 91 gelagert. Das Abtriebsritzel des vorzugsweise als elektronisch gesteuerter Schrittmotor ausgebildeten Elektromotors 80 überträgt seine Drehbewegung über ein Zahnriemengetriebe 90 auf die Schwenkachse 91. Auf der Schwenkachse 91 ist ein Werkzeugspindeltrieb 11 quer zur Schwenkachse befestigt, aus dem gemäß Figur 8 bzw. 9 ein Bearbeitungswerkzeug 10 in Form eines Fräskopfes nach oben herausragt. Der Werkzeugspindeltrieb 11 kann von seiner Grundstellung mit vertikaler Drehachse durch Drehung der Schwenkachse 91 über den Zahnriementrieb 90 seitlich sowohl in die eine Richtung als auch in die andere Richtung jeweils um 90° bis in die Horizontale, also insgesamt um 180° verschwenkt werden. Bei entsprechender Ansteuerung des Elektromotors 80 läßt sich somit die Drehachse des Werkzeugspindeltriebes 11 auf beliebige Winkel positionieren. Zusammen mit der Steuerung der X-Achse 30, der Y-Achse 31, der Z-Achse 32 und der C-Achse 33 können zahlreiche Elektrodenformen durch Fünf-Achsen-Fräsen hergestellt werden. Vorzugsweise ist als Werkzeugspindeltrieb 11 eine Schnellfrequenzspindel vorgesehen, so daß die Elektrodenrohling durch Hochgeschwindigkeitsfräsen bzw. -schleifen mit Drehzahlen in der Größenordnung bis zu 50.000 Umdrehungen pro Minute und mehr bearbeitet werden können.

In den Figuren 8a und 9a ist eine identische Bearbeitungseinrichtung dargestellt, in die statt des Fräswerkzeuges 10 ein Schleifwerkzeug 10˝ eingesetzt ist.

Um einen automatischen Wechsel von Bearbeitungswerkzeugen 10 bzw. 10˝ zu ermöglichen, ist gemäß Figur 1 neben der Bearbeitungseinrichtung 8 eine Werkzeugwechseleinrichtung 16 mit einem Schwenkarm 17 angeordnet. Die in den Figuren 10 und 11 vergrößert dargestellte Werkzeugwechseleinrichtung weist an ihrem Schwenkarm 17 hintereinander vier Werkzeugablagepositionen 117 zur Aufnahme von Spannköpfen 100 auf, in die Bearbeitungswerkzeuge 10 bzw. 10˝ eingespannt sind. Der Schwenkarm 17 ist am oberen Ende einer vertikal angeordneten Welle 112 befestigt, die auf zwei Lagern 115, 116 gelagert ist. Zur Verschwenkung der Welle 112 ist an deren unterem Ende ein pneumatischer Drehzylinder 114 angeflanscht. Die Winkelstellung des Schwenkarmes 17 ist durch zwei Endanschläge 111, 113 begrenzt. Zur Abschaltung des Drehzylinders 114 dienen zwei Endschalter, die in den Figuren 2 bzw. 2a mit den Ziffern 18 und 19 bezeichnet sind.

Die gesamte Einheit ist mittels einer ersten Linearführung 101 in X-Richtung und mittels einer zweiten Linearführung 118 mit integriertem Antrieb in Z-Richtung verfahrbar.

Soll ein gebrauchtes Bearbeitungswerkzeug 10 bzw. 10˝ gewechselt werden, so verfährt die Werkzeugwechseleinrichtung 16 zunächst mit einer leeren Werkzeugablageposition 117 zur Bearbeitungseinrichtung 8 und senkt den Schwenkarm 17 ab.

Nach Aufnahme des Spannkopfes mit dem verbrauchten Bearbeitungswerkzeug fährt die Werkzeugwechseleinrichtung wieder hoch und positioniert einen neuen Spannkopf 100 mit einem neuen Bearbeitungswerkzeug 10 bzw. 10˝ über den Bearbeitungseinrichtung 8. Nach Absenken des Schwenkarmes 17 kann der Spannkopf 100 an der Bearbeitungseinrichtung 8 automatisch angekuppelt werden.

## Patentansprüche

1. Verfahren zur elektroerosiven Bearbeitung von metallischen Werkstücken (3) mit Hilfe von Werkzeugelektroden, welche automatisch einem Erodierkopf (1) aus einem Magazin (9) zugeführt und nach Verbrauch ausgewechselt werden, dadurch gekennzeichnet, daß der Erodierkopf (1) zur Herstellung der Elektrode (2) einen Rohling (12) aus einem Magazin (9) entnimmt und mit diesem in eine Bearbeitungsposition (5) verfährt, in welcher der Erodierkopf (1) den Rohling (12) zur Bearbeitung von oben entlang eines spanabhebenden Werkzeuges (10, 10˝), vorzugsweise eines rotierenden Fräswerkzeuges oder Schleifwerkzeuges, bewegt, und/oder daß der Erodierkopf (1) eine nachzuarbeitende Elektrode (2) zur Bearbeitung von oben entlang eines spanabhebenden Werkzeuges (10, 10˝), vorzugsweise eines rotierenden Fräswerkzeuges oder Schleifwerkzeuges, bewegt, und daß nach der Herstellung oder Nacharbeitung der Elektrode (2) der Erodierkopf (1) in eine Erodierposition (4) verfährt, in welcher die elektroerosive Bearbeitung des Werkstücks (3) in an sich bekannter Weise, jedoch ohne Umspannen der Elektrode (2), durchgeführt wird.

2. Verfahren nach Anspruch 1, dadurch gekennzeichnet, daß zur Herstellung einer Elektrode (2) der Rohling (12) zunächst mit Übermaß vorgearbeitet wird, daß sodann die Abweichungen der Ist-Maße von den Soll-Maßen der Elektrode (12) ausgemessen werden und daß diese Soll-Ist-Abweichungen in einer folgenden Nachbearbeitung der Elektrode (2) als Korrektur berücksichtigt werden.

3. Verfahren nach Anspruch 1 oder 2, dadurch gekennzeichnet, daß bei der elektroerosiven Bearbeitung der Erodierkopf (1) in vorbestimmten Zeitabständen oder nach Erreichen einer vorgegebenen Erodiertiefe oder nach einer vorgegebenen Anzahl von Erodiervorgängen aus der Erodierposition (4) herausfährt, daß sodann die Abweichungen der Ist-Maße von den Soll-Maßen der Elektrode (2) ausgemessen werden, daß - sofern diese Soll-Ist-Abweichungen unterhalb eines vorbestimmten Wertes X1 liegen - der Erodierkopf (1) wieder in die Erodierposition (4) verfährt und die elektroerosive Bearbeitung fortsetzt, wobei die Soll-Ist-Abweichungen als Korrektur berücksichtigt werden, daß - sofern die Soll-Ist-Abweichungen größer als der vorbestimmte Wert X1 sind, jedoch kleiner als ein vorbestimmten Wert X2, - der Erodierkopf (1) in die Bearbeitungsposition (5) verfährt, in der die Elektrode (2) nachgearbeitet wird, wobei die Abweichungen der neuen Ist-Maße von den Soll-Maßen als Korrektur bei der elektroerosiven Bearbeitung berücksichtigt werden, daß - sofern die Soll-Ist -Abweichungen den vorbestimmten Wert X2 überschreiten - die verbrauchte Elektrode (2) aus dem Erodierkopf (1) entnommen wird und eine neue Elektrode (2) zur elektroerosiven Bearbeitung entweder hergestellt oder aus dem Magazin (19) entnommen wird.

4. Vorrichtung zur Durchführing des Verfahrens nach Anspruch 1, mit mindestens einem Erodierkopf (1) zur Aufnahme einer Werkzeugelektrode, der auf mindestens zwei Führungen, nämlich einer Führung in Vorschubrichtung zum Werkstück hin (Z-Achse, 32) und einer Führung in einer Richtung senkrecht dazu (X-Achse, 30), verfahrbar ist, mit mindestens einer elektronischen Steuereinrichtung (12a) zur Steuerung der Bewegung des Erodierkopfes (1), dadurch gekennzeichnet, daß eine Einrichtung zur spanabhebenden Bearbeitung (8, 8′) vorgesehen ist, deren Werkzeug (10, 10′, 10˝) mit der Bearbeitungsseite nach oben weist oder waagrecht angeordnet ist, und daß die Achse (30) des Erodierkopfes (1) in X-Richtung so weit verlängert ist, daß der Erodierkopf (1) zwischen dem zu bearbeitenden Werkstück (3) und der Bearbeitungseinrichtung (8, 8′) verfahrbar ist.

5. Vorrichtung nach Anspruch 4, dadurch gekennzeichnet, daß die Bearbeitungseinrichtung (8) mindestens einen Werkzeugspindeltrieb (11) zum Antrieb eines rotierenden Bearbeitungswerkzeuges (10, 10˝) aufweist.

6. Vorrichtung nach Anspruch 5, dadurch gekennzeichnet, daß der Werkzeugspindeltrieb (11) zwischen einer Position mit vertikaler Drehachse und einer Position mit horizontaler Drehachse kontinuierlich verschwenkbar ausgebildet ist.

7. Vorrichtung nach einem der Ansprüche 4 bis 6, dadurch gekennzeichnet, daß eine Meßeinrichtung (15) mit einem Meßfühler (7) zur Bestimmung der Ist-Maße der Elektroden (2) vorgesehen ist.

8. Vorrichtung nach einem der Ansprüche 4 bis 7, dadurch gekennzeichnet, daß mindestens ein Erodierkopf (1) eine Führung in Y-Richtung (Y-Achse 31) aufweist, die senkrecht zur Z-Achse (32) und senkrecht zur X-Achse (30) angeordnet ist, und daß die Elektrode (2) um ihre Längsachse (Drehachse 37) gesteuert drehbar ist.

9. Vorrichtung nach einem der Ansprüche 4 bis 8, dadurch gekennzeichnet, daß eine Werkzeugwechselvorrichtung (16) zum automatischen Wechseln des Bearbeitungswerkzeuges (10, 10˝) vorgesehen ist.

10. Vorrichtung nach Anspruch 8, dadurch gekennzeichnet, daß die Bearbeitungseinrichtung (8′) als ortsfeste, linear verfahrbare bzw. verschwenkbare Halterung zur Aufnahme von Drehwerkzeugen (10′)ausgebildet ist und daß der Rohling (12) bzw. die Elektrode (2) um die eigene Achse (Drehachse 37) drehbar ist.

## Claims

1. A process for the electroerosive processing of metal workpieces (3) with the aid of tool electrodes, which are automatically fed to an eroding head (1) from a magazine (9) and then exchanged after use, characterised in that the eroding head (1) takes a blank (12) from a magazine (9) for forming the electrode (2) and proceeds with this into a processing position (5), at which the eroding head (1) moves the blank (12) for processing over a cutting tool (10, 10˝), which is preferably a rotating milling or grinding tool, and/or that the eroding head (1) moves an electrode (2), which is to be reprocessed, for processing over a cutting tool (10, 10˝), which is preferably a rotating milling or grinding tool, and in that after the formation or reprocessing of the electrode (2) the eroding head (1) proceeds into an eroding position (4) at which the electroerosive processing of the workpiece (3) is performed in a manner known per se, but without the electrode (2) being refitted.

2. A process according to Claim 1, characterised in that for the formation of an electrode (2) the blank (12) is intially rough-machined oversize, in that the deviations of the actual dimensions from the desired dimensions of the electrode (12) are then measured and in that these deviations of the actual from the desired are taken into account as corrections in a subsequent reprocessing of the electrode (2).

3. A process according to Claim 1 or 2, characterised in that during the electroerosive processing the eroding head (1) comes out of the eroding position at predetermined intervals, or after reaching a specified depth of erosion, or after a specified number of eroding operations, the deviations of the actual dimensions from the desired dimensions of the electrode (2) are then measured, in that, as long as the deviations of the actual from the desired do not exceed a predetermined value X1, the eroding head (1) proceeds again into the eroding position (4) and continues the electroerosive process, the deviations of the actual from the desired being taken into account as corrections, in that, as long as the deviations of the actual from the desired are greater than the predetermined value X1, but smaller than a predetermined value X2, the eroding head (1) proceeds into the processing position (5) in which the electrode (2) is reprocessed, the deviations of the new actual dimensions from the desired dimensions being taken into account as corrections during the electroerosive processing, in that, as long as the deviations of the actual from the desired exceed the predetermined value X2, the used electrode is taken out of the eroding head (1) and a new electrode (2) is either produced or taken from the magazine (19).

4. Apparatus for carrying out the process according to Claim 1, with at least one eroding head (1) for accepting a tool electrode which can be moved on at least two guides, namely one guide for advancing in relation to the workpiece (Z axis, 32) and one guide in a direction vertical to this (X axis, 30), with at least one electronic control device (12a) for controlling the movement of the eroding head (1), characterised in that a machining device (8,8′) is provided, whose tool (10,10,10˝) has its machining side pointing upwards or is horizontally disposed, and in that the axis (30) of the eroding head (1) is extended in the X direction such that the eroding head (1) can be moved between the workpiece which is to be processed and the machining device (8,8′).

5. Apparatus according to Claim 4, characterised in that the machining device (8) has at least one tool spindle drive (11) for driving a rotating machine tool (10,10˝).

6. Apparatus according to Claim 5, characterised in that the tool spindle drive (11) is constructed so as to be continuously swivelled between a position with a vertical axis of rotation and a position with a horizontal axis of rotation.

7. Apparatus according to one of Claims 4 to 6, characterised in that a measuring device (15) is provided with a sensor (7) for establishing the actual dimensions of the electrode (2).

8. Apparatus according to one of the Claims 4 to 7, characterised in that a least one eroding head (1) has a guide running in the Y direction (Y axis 31) which is perpendicular to the Z axis (32) and perpendicular to the X axis (30), and in that the electrode (2) is controllably rotatable about its longitudinal axis (axis of rotation 37).

9. Apparatus according to one of the claims 4 to 8, characterised in that a tool-changing device (16) is provided for the automatic changing of the machining tool (10,10˝).

10. Apparatus according to Claim 8, characterised in that machining device (8′) is constructed as a fixed holder for accepting turning tools (10′) which can be moved in a straight line and/or swivelled, and in that the blank (12) or the electrode 92), as the case may be, is rotatable about its own axis (axis of rotation 37).

## Revendications

1. Procédé d'usinage de pièces métalliques (3) par électroérosion au moyen d'électrodes amenées automatiquement d'un magasin (9) à la tête d'érosion, puis changées après usage, caractérisé en ce que la tête d'érosion (1), pour fabriquer l'électrode (2), extrait une ébauche (12) d'un magasin et se déplace avec celle-ci pour venir en position de façonnage (5), dans laquelle la tête d'érosion (1) déplace l'ébauche (12), pour son façonnage, à partir du haut le long d'un outil (10, 10˝) d'enlèvement de matière, de préférence un outil rotatif de fraisage ou de meulage, et/ou en ce que la tête d'érosion (1) déplace une électrode à retoucher (2), pour son façonnage, à partir du haut le long d'un outil (10, 10˝), d'enlèvement de matière, de préférence un outil rotatif de fraisage ou de meulage et en ce que la tête d'usinage (1), après façonnage ou retouche de l'électrode (2), vient en position d'érosion (4) dans laquelle l'usinage de la pièce (3) s'effectue par électroérosion, de manière connue, mais sans démontage de l'électrode (2).

2. Procédé selon la revendication 1, caractérisé en ce que pour façonner une électrode (2), l'ébauche (12) est tout d'abord produite avec surcotes, puis les écarts entre les cotes réelles et les cotes théoriques de l'électrode (2) sont mesurés et pris en compte comme éléments correctifs dans une opération ultérieure de retouche de l'électrode (2).

3. Procédé selon la revendication 1 ou 2, caractérisé en ce que :
- pendant l'usinage par électroérosion, la tête d'érosion se dégage de la position d'érosion à des intervalles de temps donnés, ou après avoir atteint une profondeur d'érosion donnée ou après un nombre donné d'opérations d'érosion,
- les écarts entre cotes réelles et cotes théoriques de l'électrode (2) sont aussitôt mesurés,
- si ces écarts sont inférieurs à une valeur prédéterminée (X1), la tête d'érosion (1) revient à la position d'érosion (4) et reprend l'opération d'usinage, les écarts étant pris en compte comme éléments correctifs,
- si ces écarts sont supérieurs à la valeur (X1), mais inférieurs à une valeur prédéterminée (X2), la tête d'érosion se déplace pour venir en position de façonnage (5), dans laquelle l'électrode (2) est retouchée, les écarts entre ces nouvelles cotes réelles et les cotes théoriques étant pris en compte comme éléments correctifs dans l'usinage par électroérosion,
- si les écarts entre cotes réelles et cotes théoriques dépassent la valeur prédéterminée (X2), l'électrode en service (2) est retirée de la tête d'érosion (1) et une nouvelle électrode (2) pour usinage par électroérosion est façonnée ou prise au magasin (19).

4. Dispositif pour la mise en oeuvre du procédé de la revendication 1 , comprenant au moins une tête d'érosion (1) pouvant recevoir une électrode d'usinage, mobile sur au moins deux guides, notamment un guide selon la direction de plongée sur la pièce (axe Z, 32) et un guide (axe X, 30) perpendiculaire à la direction du premier et au moins un dispositif de pilotage électronique (12a) servant à commander le mouvement de la tête d'érosion, caractérisé en ce qu'il est prévu un dispositif de façonnage par enlèvement de matière (8, 8′) dont l'outil (10, 10′, 10˝) à sa face active tournée vers le haut ou est disposé horizontalement, l'axe (30) de la tête d'érosion (1) s'étendant selon la direction (X) suffisamment pour que la tête d'érosion puisse aller de la pièce (3) à usiner au dispositif du façonnage (8, 8′).

5. Dispositif selon la revendication 4, caractérisé en ce que le dispositif de façonnage (8) comporte au moins un entraînement à vis sans fin (11) pour assurer la rotation de l'outil de façonnage (10, 10˝).

6. Dispositif selon la revendication 5, caractérisé en ce que l'entraînement à vis sans fin (11) peut pivoter en continu entre une position dans laquelle l'axe de rotation est vertical et une position dans laquelle l'axe de rotation est horizontal.

7. Dispositif selon l'une des revendications 4 à 6, caractérisé en ce qu'un dispositif de mesure (15) équipé d'un palpeur (7) est prévu pour déterminer les cotes réelles des électrodes (2).

8. Dispositif selon l'une des revendications 4 à 7, caractérisé en ce qu'au moins une tête d'érosion (1) présente un guidage selon la direction Y (axe Y, 31) laquelle est perpendiculaire à la fois à l'axe Z (32) et à l'axe X (30), l'électrode (2) pouvant tourner avec commande autour de son axe longitudinal (axe de rotation (37).

9. Dispositif selon l'une des revendications 4 à 8, caractérisé en ce qu'il est prévu un dispositif (16) de changement automatique de l'outil de façonnage (10, 10˝).

10. Dispositif selon la revendication 8, caractérisé en ce que le dispositif de façonnage (8′) est constitué par un support fixe, mobile linéairement ou pivotant, pouvant recevoir des outils de tournage (10′), l'ébauche (12) ou l'électrode (2) pouvant tourner autour de son axe (axe de rotation 37).
